# EUROPEAN PATENT SPECIFICATION

(11) **EP 3 765 379 B1**
(45) Date of publication and mention of the grant of the patent: **17.07.2024**
(21) Application number: 18788872.2
(22) Date of filing: 15.10.2018
(51) Int. Cl.: B65D 81/26, C08K 3/34, C09D 183/04

(54) **COMPOSITIONS**
ZUSAMMENSETZUNGEN
COMPOSITIONS

(30) Priority: 12.03.2018 GB 201803923
(43) Date of publication of application: 20.01.2021
(73) Proprietor: Johnson Matthey Public Limited Company, London EC4A 4AB (GB)
(72) Inventor: ASHFIELD, Laura, Reading, Berkshire RG4 9NH (GB); RODRIGUES RAMOS, Jhonny, Reading, Berkshire RG4 9NH (GB); XU, Han, Reading, Berkshire RG4 9NH (GB)
(74) Representative: Johnson Matthey Plc
(86) International application number: PCT/GB2018/052955
(87) International publication number: WO 2019/175524

(56) References cited:
- WO-A1-2018/007798
- GB-A- 2 538 255
- US-A1- 2014 135 416
- US-B1- 7 344 585

## Description

### FIELD OF THE INVENTION

The present invention relates to materials and methods for the adsorption of ethylene. In particular, the present invention relates to the use of silicon elastomer coatings to produce materials suitable for the adsorption of ethylene.

### BACKGROUND OF THE INVENTION

The over-ripening or spoiling of fruit, vegetables and other organic matter during transit or storage can lead to significant produce loss and wastage. This is an increasing issue for those involved in fresh produce supply chains which may involve long transit times and variable climatic conditions. Modification of the atmosphere in which the organic matter is stored has been shown to be an effective strategy to prolong produce life. For example, alterations in oxygen and carbon dioxide levels within produce packaging can reduce produce respiration rates and therefore slow down the spoiling of fresh produce.

Other strategies involve the removal of volatile organic compounds (VOCs) from within, or surrounding, the produce packaging. VOCs are typically emitted by the produce itself, or may be present in the environment in which the produce is stored or transported.

The presence of such VOCs can, for example, accelerate the spoiling of produce, lead to unwanted odours or tastes, or produce colour changes or other changes in appearance.

One such VOC is ethylene. Ethylene is a plant hormone and has a key role in many physiological processes in plants. For example, exogenous ethylene can initiate fruit ripening which in turn can lead to release of ethylene as the fruit ripens leading to high local concentrations. Other fresh produce types are also sensitive to ethylene even if their own ethylene production is low. The rate of ethylene generation can be a key factor in determining local ethylene concentrations, and this rate varies significantly between produce types. Excessive ethylene levels can lead to, for example, the premature ripening of fruit and vegetables, the wilting of fresh flowers, and the loss of green colour and an increase in bitterness of vegetables.

The control of ambient ethylene levels has been found to be effective in prolonging the shelf-life of many horticultural products, and various methods of ethylene control are utilised commercially. Methods include those based on ethylene adsorption and oxidation, for example the use of potassium permanganate.

Palladium-doped zeolites have been found to act as ethylene adsorbents. For example, it is described in WO2007/052074 (Johnson Matthey Public Limited Company) that palladium-doped ZSM-5 may be used to adsorb ethylene derived from organic matter. Adsorbents used to remove ethylene are typically used in the form of a powder or as granules. In the case of use within a fresh produce package, the adsorbent material is typically contained within a sachet, pad or other insert located within the package.

It would be advantageous to incorporate the adsorbent materials into packaging materials as an alternative to providing the adsorbent inside a sachet, pad or other type of insert. In this case the adsorbent material would be more widely dispersed within the package and could be protected from direct contact with water. Furthermore, if the adsorbent material is combined with the primary packaging there is no need for an additional insert or inserts to be placed inside the packaging. These advantages could lead to less adsorbent material being included, reduced packaging material, and fewer processing steps.

However, the combination of inorganic adsorbents with polymeric materials typically leads to a significant loss of adsorbent capacity and / or a reduced rate of adsorption, leading to poor performance. Polymer processing methods can also interfere with the active material and lead to deactivation. Resulting materials may also suffer from low stability.

WO2016181132A1 (Innovia Films Ltd, Food Freshness Technology Holdings Ltd) describes a film for use in a packaging structure which comprises a coating on the film surface which comprises a binder and a particulate protuberent component able to remove VOCs. The examples utilise a palladium-doped zeolite with water-soluble acrylic copolymer or polyurethane binders. It is claimed that the protrusion of the particles can improve the efficiency of the removal of volatile organic compounds due to increased surface area of the scavenger to the environment. However, such protrusion may lead to problems with loss of the scavenging material and potential food contact, or exposure of the adsorbent material to water.

WO2018/007798A1 discloses a label facestcock film comprising protuberant VOC scavenger particles held on the surface of a base film with a binder. Its examples all use polyurethane binder and zeolite, but silicone resins are mentioned in a list of candidate binders.

GB2538255A discloses a film for packaging comprising protuberant VOC scavenger particles held on the surface of a base film with a binder. Its examples all use polyurethane or acrylic binder with a palladium zeolite, but silicone resins are mentioned in a list of candidate binders.

There remains a need to develop additional methods and materials which enable the successful combination of inorganic ethylene adsorbents with packaging materials.

### SUMMARY OF THE INVENTION

The present inventors have surprisingly found that silicone elastomers may be used in combination with inorganic ethylene adsorbents to provide coating compositions which are stable, and which retain significant adsorbent capacity and rate of adsorption. Such compositions may be used to coat base materials to produce coated materials which have high utility for the adsorption of ethylene.

The invention allows materials to be provided for the adsorption of ethylene, the material comprising a base material and a coating on the surface of the base material, the coating comprising a silicone elastomer and an inorganic ethylene adsorbent.

The material may be a packaging material. Typically, when the material is a packaging material, the base material is a polymer film. The packaging materials as described herein have the potential to offer enhanced removal of ethylene from within a package, for example ethylene emitted by fresh produce, such as by fruit and / or vegetables.

In a first aspect of the invention, there is provided an addition-cure siloxane composition comprising (i) a polyorganosiloxane comprising at least two alkenyl groups; (ii) an organohydrogenpolysiloxane containing at least two hydrogen atoms bonded to silicone atoms; and (iii) an inorganic ethylene adsorbent comprising a zeolite doped with palladium. Such compositions have high potential utility for coating base materials to yield materials suitable for the adsorption of ethylene.

In a second aspect of the invention, there is provided a material for the adsorption of ethylene comprising a base material and a coating material on the surface of the base material and comprising a cured product of the composition, cured in the presence of a curing catalyst.

In a third aspect of the invention there is provided a method for making an addition-cure siloxane composition as described herein, the method comprising the steps of combining the polyorganosiloxane, the organohydrogenpolysiloxane, the inorganic ethylene adsorbent, and a curing catalyst.

In a fourth aspect of the invention there is provided a method for making a material as described herein, the method comprising the steps of (a) coating the base material with an addition-cure siloxane composition comprising (i) a polyorganosiloxane comprising at least two alkenyl groups; (ii) an organhydrogenpolysiloxane containing at least two hydrogen atoms bonded to silicone atoms; (iii) the inorganic ethylene adsorbent; and (iv) a curing catalyst; and (b) curing the siloxane composition.

In a fifth aspect of the invention, there is provided a packaging structure comprising a material, the material comprising a base material and a coating on the surface of the base material, the coating comprising a silicone elastomer and the inorganic ethylene adsorbent.

### BRIEF DESCRIPTION OF THE FIGURES

Figure 1 shows the results of an ethylene adsorption test using the coated films of examples 2A, 2B and 2C.
Figure 2 shows the results of an ethylene adsorption test using the coated films of examples 3A, 3B and 3C.
Figure 3 shows the results of an ethylene adsorption test using the coated films of Example 4
Figure 4 shows the results of an ethylene adsorption test using the coated films of Example 5
Figures 5A and 5B show SEM images of the coated films of Example 6
Figure 6 shows the results of fruit testing using the coated films of Example 7
Figure 7 shows the results of ethylene adsorption testing of the films of Example 8.

### DETAILED DESCRIPTION OF THE INVENTION

The present invention relates to siloxane compositions comprising inorganic ethylene adsorbents, and to materials with a silicone elastomer coating comprising an inorganic ethylene adsorbent.

Silicone elastomers are made from linear polyorganosiloxanes which bear reactive side chains, such as vinyl groups, which can be crosslinked to form silicone elastomers.

The present inventors have identified that silicone elastomers which are formed by addition curing provide advantages with regards to the retention of inorganic ethylene adsorbent activity over silicone elastomers formed by other curing methods, such as peroxide or condensation curing. Without being bound by theory, it is proposed that the reagents and reactive groups used for other curing techniques can react with transition metals which may be present in the inorganic adsorbents causing a reduction in activity.

Therefore, preferably, the siloxane compositions described herein are cured by an addition curing process, and the coatings comprise silicone elastomers formed by an addition curing process.

As shown in the schematic reaction scheme below, addition curing typically functions by the reaction of Si-H groups present in a cross-linking agent with vinyl groups present in the polyorganosiloxane, in the presence of catalyst, such as a salt or complex of platinum, palladium or rhodium, for example:

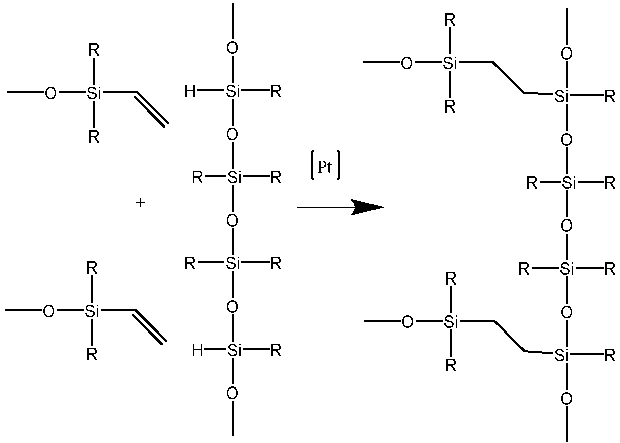

In one aspect of the present invention, there is provided an addition cure siloxane composition comprising:
(i) a polyorganosiloxane comprising at least two alkenyl groups;
(ii) an organohydrogenpolysiloxane containing at least two hydrogen atoms bonded to silicone atoms;
(iii) an inorganic ethylene adsorbent, wherein the inorganic ethylene adsorbent comprises a zeolite doped with palladium.

Typically, the polyorganosiloxane is a polydimethylsiloxane, for example a vinyl terminated polydimethylsiloxane, represented by formula I (whereby n designates a repeating unit):

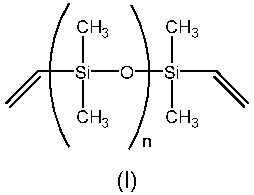

Typically, the vinyl terminated polydimethylsiloxane has a molecular weight of between 300 and 28,000 g/mol.

Typically, the vinyl terminated polydimethylsiloxane has a viscosity of less than 2000 mPa.s at 25 °C, preferably less than 1500 mPa.s or less than 1000 mPa.s, or more preferably less than 500 mPa.s, such as less than 250 mPa.s. The vinyl terminated polydimethylsiloxane may have a viscosity greater than 0.01 mPa.s. Reducing the viscosity of the vinyl terminated polydimethylsiloxane leads to a reduction in the viscosity of the siloxane composition, which can be beneficial for consistent application to the base material and enable methods such as spray coating to be utilised.

Such materials are commercially available, for example from Gelest Inc.

The compositions also comprise an organohydrogenpolysiloxane containing at least two hydrogen atoms bonded to silicone atoms as a cross-linking agent, for example a methylhydrosiloxane-dimethylsiloxane copolymer, such as a trimethyl siloxane terminated methylhydrosiloxane-dimethylsiloxane copolymer, represented by formula II (whereby n and m designate repeating units):

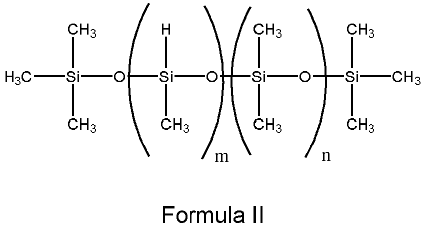

Typically, the trimethyl siloxane terminated methylhydrosiloxane-dimethylsiloxane copolymer has a molecular weight of between 500 and 30,000 g/mol, such as between 900 and 30,000 g/mol.

Preferably, the polyorganosiloxane is a vinyl terminated polydimethylsiloxane and the organohydrogenpolysiloxane is a methylhydrosiloxane-dimethylsiloxane copolymer.

The percentage of silicone atoms in the organohydrogenpolysiloxane which are bonded to hydrogen (Si-H content) is an important factor in the degree of cross-linking observed in the cured elastomer composition. Such materials with different ranges of Si-H content are commercially available, for example from Gelest Inc.

It has been found that variation of the degree of crosslinking in the coated materials can lead to changes in the rate of ethylene adsorption. Preferably, the organohydrogenpolysiloxane is a methylhydrosiloxane-dimethylsiloxane copolymer, with a mol% of MeHSiO-H greater than 5 mol%, or greater than 15 mol%, such as between 5 and 60 mol%, or between 15 and 60 mol%, more preferably between 40 mol% and 60 mol%. Such materials typically have a molecular weight of between 900 and 30,000 g/mol, such as between 1500 and 30,000 g/mol.

It has been found that it may be preferred to use methylhydrosiloxane-dimethylsiloxane copolymer materials with a molecular weight in the range 500 to 2500 g/mol. Such materials preferably have a mol% of MeHSiO-H greater than 5 mol%, or greater than 15 mol%, such as between 5 and 60 mol%, or between 15 and 60 mol%, more preferably between 40 mol% and 60 mol%. Such materials have been found to provide siloxane compositions with properties enabling rapid coating onto polymer films, and which can form coatings with high rates of ethylene adsorption.

Typically, the siloxane compositions are cured by raising the temperature of the composition above ambient temperature. In such cases curing is typically carried out using a platinum-group metal catalyst, such as a platinum catalyst. Such catalysts are commercially available, for example the platinum based catalyst C1098 (Pt(0) complex in tetramethyltetravinylcyclotetrasiloxane) available from Johnson Matthey), or may be readily prepared by the person skilled in the art. Typically, a thermal curing step involves heating the coating to a temperature of between 60 and 90 °C, for example at 80 °C for 5 minutes.

In some cases, it may be preferred to use ultraviolet (UV) activated siloxane compositions, i.e. compositions which may be activated by the application of UV light leading to curing. Such compositions may provide advantages with regards to the retention of ethylene scavenging activity of the inorganic ethylene adsorbents, which it has been found can suffer from deactivation at raised temperatures in the presence of the components of the siloxane composition. In addition, as UV activated compositions can typically be stored for longer durations and have lower curing energy requirements than thermally curable compositions. In such cases UV activation and then curing is typically carried out using a platinum catalyst, for example platinum (II) acetylacetonate (Pt(acac)₂, commercially available from Sigma Aldrich) or trimethyl(methylcyclopentadienyl)platinum(IV) (MeCpPtMe₃, commercially available from Sigma Aldrich). Typically, a UV activation step involves the application of UV light to the coating for a period of between 10s and 10 minutes, such as between 1 and 10 minutes.

It will be understood that the compositions may be formulated to include the curing catalyst, or that the curing catalyst may be provided separately and mixed with the composition prior to application.

The compositions also comprise inorganic ethylene adsorbents, typically in particulate form. Such materials are able to remove ethylene from an environment in contact with the adsorbent. It should be noted that the term "adsorbent" and "adsorption" as used herein should not be construed as being limited to the uptake of ethylene to a particular route and includes the chemical conversion of ethylene into secondary compounds. As used herein, the term "adsorbent" is synonymous with "absorbent".

The inorganic ethylene adsorbent is a zeolite, which is doped with palladium. Zeolites may be classified by the number of T atoms, where T = Si or Al, that define the pore openings. Zeolites are referred to as small-pore (maximum pore size 8-membered ring), medium-pore (maximum pore size 10-membered ring) or large-pore (maximum pore size 12-membered ring). Preferably, in the current invention the zeolite has a small-pore or medium-pore framework, more preferably the zeolite has a small-pore framework. Zeolites with small- or medium sized pores have been found to retain a higher level of adsorbent capacity when combined with polymeric materials, in comparison to zeolites with large-pore frameworks.

Framework types may also be classified by the maximum diameter of a sphere that can diffuse along a channel of the zeolite framework. Preferably, the maximum diameter is greater than 3 Å, or more preferably greater than 3.5 Å, enabling rapid ethylene diffusion into the zeolite framework. It may be preferred that the maximum diameter is less than 5 Å, or less than 4 Å, in order to aid retention of adsorbent capacity when combined with the binder. Preferably, the maximum diameter of the framework type is between 3Å and 5Å, or preferably between 3.5 Å and 5 Å. Such data is provided for example in the Database of Zeolite Structures (Structure Commission of the International Zeolite Association, http://www.iza-structure.org/databases/).

Preferred zeolite framework types include medium-pore zeolites with an MFI framework type and small-pore zeolites with a AEI or CHA framework type. The three-letter codes used herein represent a framework type in accordance with the "IUPAC Commission on Zeolite Nomenclature" and/or the "Structure Commission of the International Zeolite Association".

It is preferred that the framework type is selected from AEI or CHA, more preferably CHA. It will be understood that the zeolites may include regions in which the framework is a mixture or intergrowth, such as a CHA / AEI intergrowth, however it is generally preferred that the zeolite has a framework that is not an intergrowth of more than one framework type.

The zeolite typically has a silica to alumina molar ratio (SAR) of less than or equal to 100:1, such as between 10:1 and 50:1, preferably 10:1 to 40:1, more preferably 20:1 to 30:1.

The zeolite framework may be counterbalanced by cations, such as by cations of alkali and/or alkaline earth elements (e.g. Na, K, Mg, Ca, Sr, and Ba), ammonium cations and/or protons. Preferably, the zeolite is in the hydrogen form.

The zeolite is doped with palladium, and typically comprises 0.1 to 10 wt% palladium based on the total weight of doped zeolite, preferably 0.2 to 2wt%, 0.3 to 1.8wt%, 0.3 to 1.6wt%, 0.3 to 1.4wt%, more preferably 0.3 to 1.2wt%, 0.4 to 1.2wt%, 0.6 to 1.2wt%, or 0.8 to 1.2wt%.

The zeolite material in the coating is preferably in the form of particles, which typically have a volume distribution with a size (d50) of 1µm to 25µm, preferably 5 and 10µm.

The particle size distribution of particles included in the coating composition may be measured, for example, by laser diffraction, for example by generating a suspension of particles in deionised water and measuring the particle size distribution using a Malvern Mastersizer 2000.

Such zeolites are typically prepared by incipient wetness impregnation using a palladium nitrate solution, drying the particles, and then calcining at a temperature between 450 and 750°C.

Typically, the inorganic ethylene adsorbent comprises at least 1wt% of the total weight of the siloxane composition, such as at least 10 wt% of the total weight of the siloxane composition, preferably at least 15wt% or at least 20 wt%. The maximum amount of inorganic ethylene adsorbent is not particularly limited in the present invention but typically the inorganic ethylene adsorbent comprises less than 50 wt% of the total weight of the siloxane composition. If the amount of inorganic ethylene adsorbent exceeds 50 wt% this can lead to difficulties with providing an even application of the coating.

Typically, the inorganic ethylene adsorbent comprises between 1 and 50 wt% of the total weight of the siloxane composition.

As previously discussed, the present inventors have found that variation of the degree of crosslinking in the cured silicone elastomer, which may be assessed by measuring the hardness of the cured silicone elastomer, can lead to changes in the rate of ethylene adsorption when the elastomer is combined with an inorganic ethylene adsorbent.

Therefore, preferably, the components of the siloxane composition are selected such that hardness of the composition after curing is at least > 15, preferably between 40-60 as measured by a Shore durometer type A.

The viscosity of the siloxane composition is preferably less than 3000 mPa·s at 25°C, more preferably less than 2000 mPa·s at 25°C, or even more preferably less than 1500 or less than 1000 mPa·s at 25°C. This enables the compositions to be used directly in roll coating methods without significant dilution with additional solvent or other thinning agents. It may also be preferred that the viscosity of the siloxane composition is preferably less than 200 mPa.s at 25°C or less than 150 mPa·s at 25°C, more preferably less than 100 mPa s, or even more preferably less than 50 mPa s. This enables the compositions also to be used directly in spray coating methods without dilution significant with additional solvent or other thinning agents. Typically, the siloxane composition has a viscosity greater than 5 mPa.s at 25°C, such as between 5 and 200 mPa.s at 25°C.

The siloxane compositions are typically made a method comprising the step of combining the polyorganosiloxane, the organohydrogenpolysiloxane, the inorganic adsorbent, and a curing catalyst. The components are typically then mixed at ambient temperature, for example using a magnetic stirrer.

It may be preferred that the method comprises the following steps:
(i) combining the polyorganosiloxane, the organohydrogenpolysiloxane, and the inorganic ethylene adsorbent;
(ii) subsequently adding a curing catalyst.

Alternatively, it may be preferred that the method comprises the following steps:
(i) combining the polyorganosiloxane, the organohydrogenpolysiloxane, and the curing catalyst;
(ii) subsequently adding the inorganic ethylene adsorbent.

In a further aspect of the invention there is provided a material for the adsorption of ethylene, the material comprising a base material and a coating on the surface of the base material, the coating comprising a silicone elastomer and the inorganic ethylene adsorbent. Such materials are able to remove ethylene from an environment in contact with the surface of the material, such the interior of a fresh produce package. The coating is formed using siloxane compositions as previously described.

The current inventors have identified that the use of silicone elastomers to bind the inorganic ethylene adsorbent in the coating is advantageous as the inorganic ethylene adsorbent may be completely encapsulated in the elastomer composition and retain significant ethylene removal rates and adsorption capacity, and that there is no requirement for the inorganic ethylene adsorbent to protrude from the surface of the coating. Therefore, in one embodiment, there is essentially no protrusion of particles of inorganic ethylene adsorbent from the surface of the coating, and / or the particles of inorganic ethylene adsorbent do not extend out from the surface of the coating beyond the basic thickness of the coating layer.

It will be understood by the skilled person that the coating may, for example, cover the entire surface of the base material, or may be applied to one side of the base material, for example in the case of a packaging material, on the side intended to form part or the whole of the interior of the package, or may be applied to part of the surface of the base material.

Typically, the inorganic ethylene adsorbent comprises at least 1 wt% of the total weight of the coating or at least 10 wt% of the total weight of the coating, preferably at least 15 wt% or at least 20 wt%. The maximum amount of inorganic ethylene adsorbent is not particularly limited in the present invention but typically the inorganic ethylene adsorbent comprises less than 50 wt% of the total weight of the coating. An inorganic ethylene adsorbent content in the coating of less than 1wt% may lead to insufficient ethylene adsorption capacity. The coating has a typical thickness of 5 to 200 µm.

Preferably, the cured silicone elastomer has a hardness of at least > 15, preferably between 40-60, as measured by a Shore durometer type A.

In a preferred embodiment of the invention, the material is a packaging material, such as a packaging film, or a bag, or a lid for a container, such as a bottle lid, or the lid of a clamshell box, or a packaging insert, such as a strip or pad, for example a Tyvek^{®} strip, or a polymer film strip.

In the case that the material is a packaging film or a bag, the base material is typically a polymer film, for example a polymer film formed from a polyamide, a polyethylene, a polypropylene, an ethylene-vinyl acetate co-polymer, a polyethylene terephthalate, a polystyrene, or a mixture, blend or co-polymer thereof. Preferably, the polymer film is an ethylene vinyl acetate, a low-density polyethylene, a high-density polypropylene, a biaxially orientated polypropylene, polyamide or a high impact polystyrene.

The polymer films may be formed from a single polymer layer, or may comprise a laminate structure of two or more layers which may be the same or different materials. Typically, the packaging films will have a thickness of between 5µm to 200µm, preferably 10 to 100µm, more preferably 15 to 40µm.

The coated materials are typically made by a method comprising the steps of (i) coating the base material with addition cure siloxane composition containing a curing catalyst as described herein; (ii) curing the siloxane composition.

The siloxane composition may be coated onto the base material in step (i) using methods known to those skilled in the art, for example by spray coating, roll coating, knife over roll coating, slot die coating.

In the case that the base material is a packaging film, the coating step may advantageously be carried out using gravure roll coating, slot die or spray coating methods.

It will be understood by the skilled person that the surface of the packaging film may be treated prior to the coating step (i) to promote adhesion, for example by plasma or corona treatment.

In step (ii), the siloxane composition applied to the base material as a coating is then cured. If the siloxane composition is a thermally curable composition, the temperature of the coating is elevated above ambient temperature to cure the composition, for example to a temperature between 60 and 90 °C. If the siloxane composition is a UV activated composition, the coating is subjected to irradiation with UV light, for example by the application of UVA light (315~400nm) and / or UVB (280∼315nm) light, or by exposure to natural light. It will be understood by the skilled person that the length of time of application of light depends on, for example, the coating thickness and the amount of inorganic adsorbent contained in the coating layer, however a typical duration for the application of UV is for a period of time between 10s and 10 minutes, such as between 1 and 10 minutes. The composition may then be elevated above ambient temperature to cure the composition, or may cure at ambient temperatures following UV activation.

The materials as described herein may be advantageously used for the adsorption of ethylene, such as ethylene originating from organic matter, such as fruit, vegetables, cut flowers, or other foodstuffs. In particular, the materials may be used for the adsorption of ethylene originating from climacteric produce, such as bananas, avocados, nectarines, melons and pears which release a burst of ethylene during ripening, accompanied by an increase in respiration. Other non-climacteric produce types which are sensitive to ethylene include potatoes, onions, broccoli, cabbage and cut flowers.

Typically, the organic matter is contained in a packaging structure during storage and transportation, such as a crate, bag, bottle, box or punnet. The materials may therefore be advantageously used to control ethylene levels within such packaging structures.

The materials may be used to seal the packaging structure, for example to seal a punnet, bottle or a box, or may form the majority of the packaging structure, such as in the case of a bag, or may be used to wrap produce or wrap containers of produce, such as boxes or produce.

The packaging structure may comprise a packaging film that is perforated, for example with holes or slits which are typically 50-500 µm in diameter or length as appropriate. Such perforations may be formed by laser perforation. In use, the degree of perforation may be used to control the gaseous composition within the packaging structure once produce has been placed inside, leading to a lower oxygen content. Such a packaging structure may be known as modified atmosphere packaging. Both unmodified and modified atmosphere packaging structures may be used with packaging films as described herein.

The present invention will now be described with reference to the following examples, which are provided to assist with understanding the present invention, and are not intended to limit its scope.

### Examples

The present invention will now be described with reference to the following examples, which are provided to assist with understanding the present invention, and are not intended to limit its scope.

### Example 1 - Preparation of 1wt% palladium-doped zeolite

1% Pd-doped H-chabazite (SAR=22): Samples were prepared by incipient wetness impregnation. Pd nitrate (-8%) solution was weighed out in an amount equivalent to 1 weight % of metal on the zeolite. The Pd nitrate solution was then diluted with water up to around 60-70% pore fill of the zeolite. The solution was added to the H-chabazite powder (obtained from Tosoh Corporation) using a pipette and every few drops added the solution was manually stirred and 'wet lumps' were broken up using a spatula to keep the sample as homogenous as possible. The sample was then dried at 105°C (2hr) and then calcined at a temperature of 700°C for 2hrs with a 10°C/min ramp rate.

### Example 2- Preparation of siloxane compositions with different cross-linker to siloxane ratios

General method of preparation of siloxane compositions (amounts of zeolite, elastomer and cross linker are provided in Table 1):
1wt% Pd chabazite (as prepared in Example 1, sieved to obtain material with a particle size less than 75 µm) was mixed with vinyl terminated polydimethylsiloxane (DMS-V21, viscosity 100 mPa.s, wt.% vinyl: 0.8-1.2, Gelest Inc.) using a speed mixer at 3000 rpm for 1 minute. Cross-linking agent HMS-501 (methylhydrosiloxane-dimethylsiloxane co-polymer, viscosity 10-15 mPa.s, 44-55 mol% MeHSiO, Gelest) was added and the mixture stirred with a spatula for 30 seconds before the addition of 2wt% platinum catalyst C1098 (Pt(0) complex in tetramethyltetravinylcyclotetrasiloxane, Johnson Matthey) (25 mg).

**Table 1 - Amounts of scavenger, elastomer and cross linker used in the examples of Example 2**

| Example | PDMS: Crosslinker wt ratio | Zeolite (g) | PDMS (g) | Cross linker (g) | Catalyst (g) | Total (g) |
|---|---|---|---|---|---|---|
| 2A | 10:1 | 2.06 | 7.27 | 0.72 | 0.025 | 10.075 |
| 2B | 20:1 | 2.08 | 7.65 | 0.38 | 0.025 | 10.135 |
| 2C | 40:1 | 2.07 | 7.81 | 0.19 | 0.025 | 10.095 |

The hardness of the siloxane compositions after curing is assessed using a Shore Durometer Type A. A sample of the silicone composition is cured and then tested with the Durometer. To ensure that the hardness value is measured after completion of the curing process, the hardness of the composition can be repeatedly tested after intervals of time until the hardness value is the same for two consecutive tests (for example the two values are within ± 1).

In example 2, a sample of each siloxane composition (2A, 2B and 2C) was cured at 80°C for 5 minutes in an oven. The hardness was then measured after 2 days at ambient temperature using a Shore durometer type A. The durometer was calibrated with values of 25 and 75 prior to the measurement of each sample. An average value after ten measurements per sample is reported.

The cured compositions gave hardness values as follows: Example 2A (10:1) 44, Example 2B (20:1) 12, Example 2C (40:1) 2.8.

### Preparation of films coated with silicone elastomers formed from compositions 2A to 2C

The compositions were coated onto a LDPE film (40 µm thickness) using a film applicator to give a coating thickness of 60 µm. The coated film was cured at 80°C for 5 minutes in an oven.

### Testing of films coated with silicone elastomers formed from compositions 2A to 2C

The tackiness of the coated films was qualitatively assessed by touching the films after curing. The adhesion of the coating was qualitatively assessed by scratching the coating with a metal spatula.

**Table 2 - Properties of films coated with compositions 2A, 2B and 2C.**

| Example | PDMS: Crosslinker wt ratio | Tacky? | Adhesion |
|---|---|---|---|
| 2A | 10:1 | No | Good |
| 2B | 20:1 | No | OK |
| 2C | 40:1 | Yes | Poor |

### Ethylene adsorption

The coated films were evaluated in an ethylene adsorption test.

General method: The coated film was placed inside a 2L jar which was subsequently flushed with 500 ppm ethylene. The size of the piece of coated film was selected to contain 0.2g of zeolite material. The jar was kept at 5°C at a controlled humidity of 95%. A sample of the gas inside the jar was taken at regular intervals and analysed for ethylene by gas chromatography.

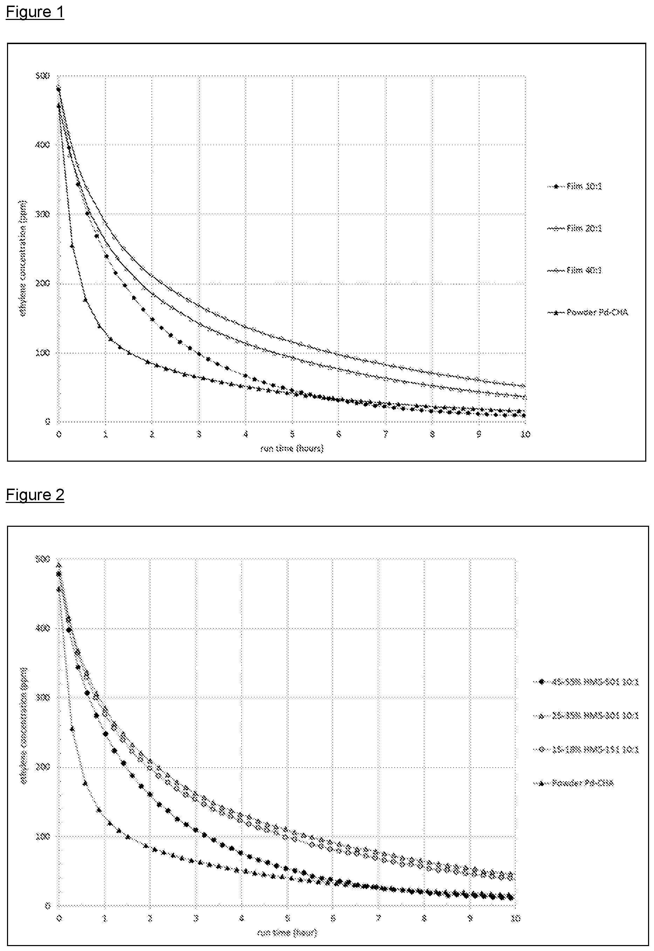

Results: The results of the ethylene adsorption test are shown in Figure 1 (with 0.2g of Pd-Chabazite powder as a control). This test indicated that all of the samples showed significant capacity to adsorb ethylene. Example 2A (elastomer to cross linker ratio 10:1) showed the highest ethylene adsorption with the ethylene concentration matching that of the control powder sample by 5 hours.

### Example 3- Preparation of siloxane compositions with different cross-linking agents

A series of examples of siloxane compositions were produced using the general method of Example 2 at an elastomer: cross linker wt. ratio of 10:1. Each cross-linking agent was a dimethylsiloxane-methylhydrosiloxane copolymer with different degrees of methylhydrosiloxane as follows:
Example 3A - HMS-501 (44-55 mol% methylhydrosiloxane, MW 900-1200 g/mol, Gelest)
Example 3B - HMS-301 (25-35 mol% methylhydrosiloxane, MW 1900-2000 g/mol, Gelest)
Example 3C - HMS-151 (15-18 mol% methylhydrosiloxane, MW 1900-2000 g/mol, Gelest)
Example 3D - HMS-071 (7-9 mol% methylhydrosiloxane, MW 1900-2000 g/mol, Gelest)
Example 3D did not cure using standard curing temperatures and times and therefore was not further assessed.

The hardness of the siloxane compositions after curing was assessed as described in Example 2.

The cured inks gave hardness values as follows: Example 3A: 52.2; Example 3B: 57.3; Example 3C: 4.2

### Preparation and testing of films coated with silicone elastomers formed from compositions 2A to 2C

The compositions were coated onto LDPE film and tested for ethylene adsorption as described in Example 2. The results are shown in Figure 2. This test indicated that all of the samples showed significant capacity to adsorb ethylene. The film coated with the composition prepared in example 3A (44-55% methylhydrosiloxane content in the cross linking agent) showed the highest ethylene adsorption with the ethylene concentration matching that of the control powder sample by 6 hours.

### Example 4 - Preparation of a polymer film coated with a UV activated silicone elastomer composition

Vinyl terminated polydimethylsiloxane (DMS-V21, viscosity 100 cSt, wt.% vinyl: 0.8-1.2, Gelest Inc) (2 mL) and cross-linking agent (HMS-501, methylhydrosiloxane-dimethylsiloxane co-polymer, viscosity 10-15 mPa.s, 44-55 mol% MeHSiO, Gelest) (136 µL) were mixed for one minute using an IKA Topolino mini magnetic stirrer at half speed. Pt (acac)₂ catalyst (20uL, 0.0256M in toluene) was added and the mixture stirred for a further minute. 1 wt% palladium-doped chabazite (0.4g) and the mixture stirred for a further five minutes. 1.2g silicone elastomer composition was added onto an LDPE polymer film and coated onto the film surface using a Mayer bar to yield a coating thickness of 30µm. The coated film was cured at room temperature under natural light for a period of 5 days.

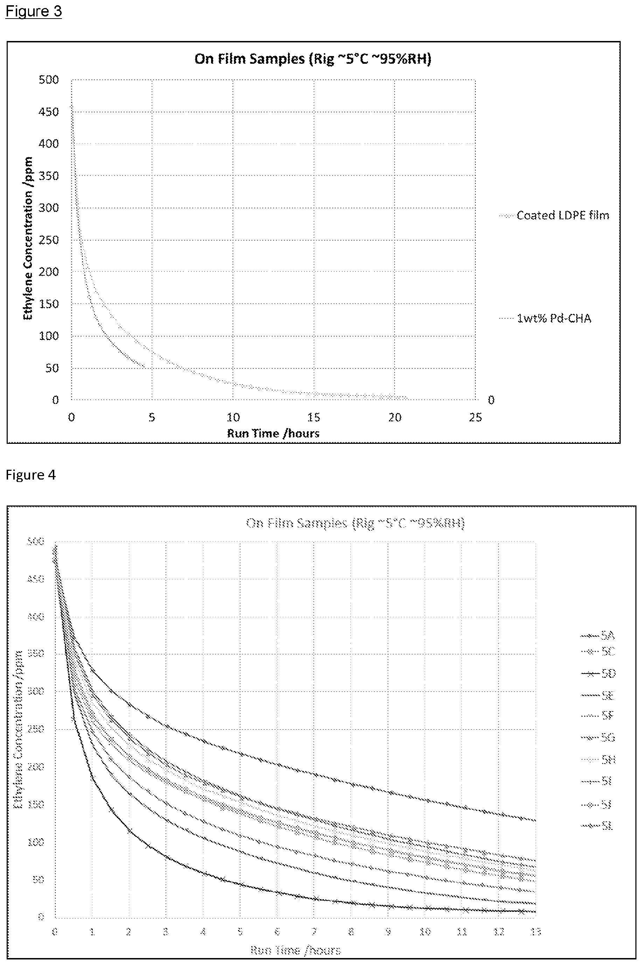

The coated film was tested for ethylene adsorption as described in Example 2 alongside a sample of the equivalent amount of 1 wt% palladium-doped chabazite powder. The results are shown in Figure 3. This experiment showed that the ethylene removal rate of the polymer film coated with the UV activated silicone elastomer composition is comparable to the powdered scavenger.

### Example 5 - Preparation and testing of films coated with different UV activated silicone elastomer compositions

General method of preparation of siloxane compositions (Examples 5A to 5F): Vinyl terminated polydimethylsiloxane (PDMS, amounts added shown in Table 3), cross- linker (methylhydrosiloxane-dimethylsiloxane co-polymer, amounts added shown in Table 3) and platinum catalyst (20 µL, 0.0256M solution of Pt (acac)₂ in toluene) were pre-mixed for 1 minute at maximum speed using a mini IKA magnetic stirrer before the addition of 1 wt% palladium-doped chabazite (0.5g). The mixture was stirred for a further five minutes.

General method of preparation of siloxane compositions (Examples 5G to 5L): As for Examples 5A to 5F except that 1g of 1 wt% Pd-doped chabazite was added.

**Table 3 - Composition of Siloxane compositions prepared in Example 5**

| Ex. | PDMS | Viscosity (mPa·s) | MW (g/mol) | Crosslinker | Viscosity (mPa·s) | MW (g/mol) | Mol% MeHSiO | PDMS / Crosslinker (ul/ul) | Volume ratio PDMS to crosslinker |
|---|---|---|---|---|---|---|---|---|---|
| 5A | DMSV31 | 1000 | 28000 | HMS071 | 25-35 | 1900-2000 | 6-7 | 1807/193 | 9.36 |
| 5B | DMSV31 | 1000 | 28000 | HMS053 | 750-1000 | 20000 - 25000 | 4-6 | 1727/273 | 6.33 |
| 5C | DMSV31 | 1000 | 28000 | HMS031 | 25-35 | 1900-2000 | 3-4 | 1708/292 | 5.85 |
| 5D | DMSV31 | 1000 | 28000 | HMS301 | 25-35 | 1900-2000 | 25-35 | 1949/51 | 38.22 |
| 5E | DMSV31 | 1000 | 28000 | HMS151 | 25-35 | 1900-2000 | 15-18 | 1899/101 | 18.80 |
| 5F | DMSV31 | 1000 | 28000 | HMS082 | 110-150 | 5500-6500 | 7-9 | 1820/180 | 10.11 |
| 5G | DMSV05 | 4-8 | 800 | HMS082 | 110-150 | 5500-6500 | 7-9 | 895/3105 | 0.29 |
| 5H | DMSV05 | 4-8 | 800 | HMS053 | 750-1000 | 20000 - 25000 | 4-6 | 612/3388 | 0.18 |
| 5I | DMSV05 | 4-8 | 800 | HMS071 | 25-35 | 1900-2000 | 6-7 | 842/3158 | 0.27 |
| 5J | DMSV05 | 4-8 | 800 | HMS151 | 25-35 | 1900-2000 | 15-18 | 1409/2591 | 0.54 |
| 5K | DMSV05 | 4-8 | 800 | HMS031 | 25-35 | 1900-2000 | 3-4 | 571/3429 | 0.17 |
| 5L | DMSV05 | 4-8 | 800 | HMS301 | 25-35 | 1900-2000 | 25-35 | 2084/1906 | 1.09 |

### The siloxane compositions 5A to 5L detailed in Table 3 were tested as follows:

### Viscosity

The viscosity of the siloxane compositions (prior to curing) were measured using a Discovery HR3 Rheometer (TA instruments). A parallel plate made of stainless steel of 40 mm diameter was used with a gap distance of 300 micron from the Peltier plate. The silicone ink was equilibrated at 25°C for 60 seconds at rest. The shear rate was increased from 0.01 to 100 over 300 seconds.

Hardness - The hardness of the silicone elastomers after curing was assessed using the method as described in Example 2 (except that the curing step was carried out by placing a sample of the siloxane composition under natural light for 5 days). An average value after five measurements per sample is reported.

### Preparation and testing of films coated with silicone elastomers formed from compositions 5A to 5L

Each of the siloxane compositions was coated onto LDPE and cured under natural light for a period of 5 days.

Tackiness - The films were tested for tackiness using the following method:
The tackiness of each film was measured via the RBT-100 Rolling Ball Tack Tester. The testing film with coating side up was placed horizontally on a flat bench. The film coating is aligned in the run way of the bearing ball to be released on the tack tester. The bearing ball with 3.175 mm (1/8") diameter was placed on the upper side of the release pin. The ball was released and rolled to a stop on the tacky coating. The distance from the point where the ball initially contacts the coating to where the ball stops was measured and recorded. Ten tests were used determine the average. A fresh strip of tape was used to begin each test, and the ball was cleaned after each roll.

Ethylene adsorption - The films were tested for ethylene uptake using a method as described in Example 2.

The results of the testing are shown in Table 4, the results of the ethylene adsorption testing are also shown in Figure 4

**Table 4 - Results of the testing of Examples 5A to 5L**

| Ex. | Siloxane composition viscosity (mPa·s) | Film tackiness (mm) | Cured siloxane composition hardness (Shore A) | Film testing - Ethylene after 4 hours (ppm) |
|---|---|---|---|---|
| 5A | 1324 | 43 | 22 | 234 |
| 5B | 2005 | Uncured¹ | | |
| 5C | 1271 | 45 | | 160 |
| 5D | 2999 | 96 | 32 | 58 |
| 5E | 2206 | 96 | 28 | 105 |
| 5F | 1907 | 15 | 15 | 157 |
| 5G | 146 | 272 | 28 | 182 |
| 5H | 836 | 300 | 26 | 170 |
| 5I | 44 | 113 | 9 | 182 |
| 5J | 30 | 300 | 16 | 160 |
| 5K | 45 | Uncured¹ | | |
| 5L | 33 | 300 | 50 | 128 |

| | | | | |
|---|---|---|---|---|
| ¹ uncured after a period of 5 days under natural light | | | | |

This data shows that the uncured siloxane composition viscosity depends upon the molar mass of elastomer and cross-linker and the mixing ratio between them, and that viscosities suitable for spray- and gravure coating may be obtained in the presence of the Pd-doped zeolite ethylene adsorbent.

The data also shows that all of the compositions tested are able to effectively adsorb ethylene. Example 5D with a MeHSiO value of 25-35 mol% shows the highest rate of adsorption.

### Example 6 - Preparation of a coated film and SEM analysis

A siloxane composition was prepared by mixing 1% Pd / Chabazite (20 wt%) with a 10 : 1 weight ratio of vinyl terminated polydimethylsiloxane (DMS-V21) and cross-linking agent (HMS-501) and platinum catalyst (10 ppm, C1098, 2% Pt in methyl vinyl cyclic siloxane, available from Johnson Matthey). The composition was coated onto an LDPE film using a film applicator and then cured by 80°C for five minutes.

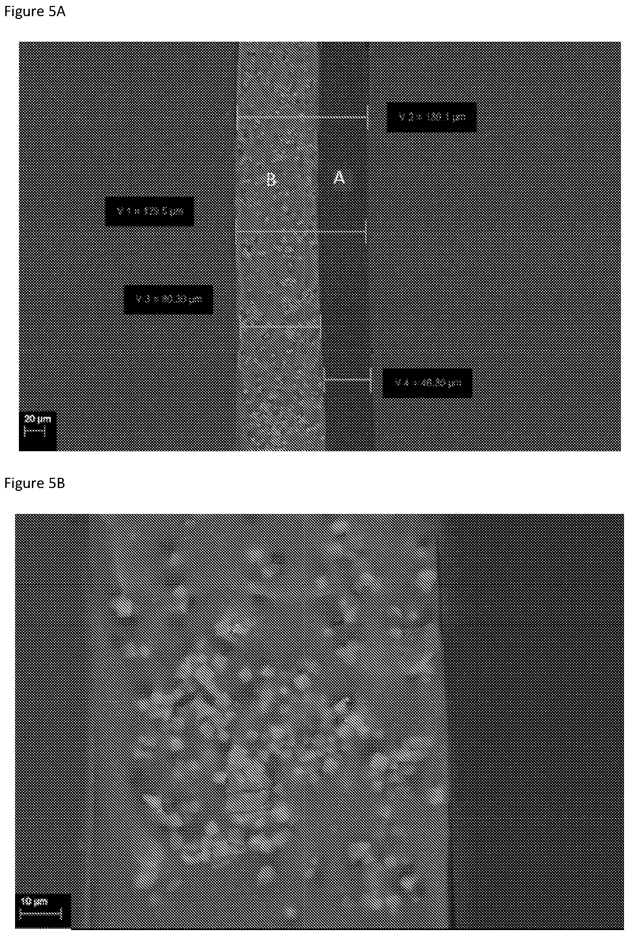

The coated film was analysed by scanning electron microscopy (SEM) (Figure 5A and 5B). These images show the formation of a coating (A) on the LDPE film (B). The coating thickness is approximately 80 µm. Figure 5B shows the particles of ethylene scavenger are encapsulated in the coating and do not protrude from the coating surface.

### Example 7 - Fruit testing

A siloxane composition was prepared according with the method described in Example 6. The composition was coated using a gravure coating onto a patch of a polyamide film and then cured by heating to 150°C.

The film including the coated patch was made into a bag with a target amount of 1% Pd-chabazite of 0.25g. Polyamide control bags (Xtend) were prepared and also polyamide bags containing sachets with 0.25g of 1% Pd-chabazite powder.

Into each bag was placed 2 pears (4 bags per treatment group). The bags were sealed and then stored at 0°C and ethylene levels inside were measured every few days by taking a sample of the head space gas and measuring by gas chromatography.

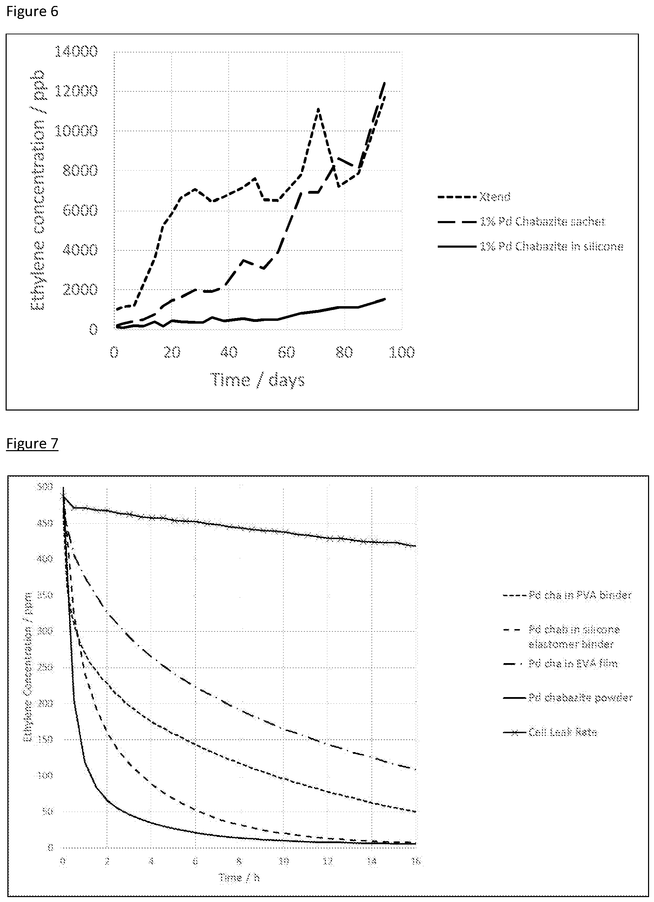

The results of the fruit trial data is provided in Figure 6. This data shows that the bags with the silicone patch maintain a low level of ethylene throughout the duration of the study, and have improved performance with respect to the 1% Pd / chabazite powder in sachets.

### Example 8 - Comparison data

The following materials were prepared:
(a) 1% Pd / chabazite powder
   Prepared as described in Example 1
(b) 1% Pd / chabazite powder in a water-soluble binder.
   4 g of a 5 % polyvinyl alcohol (PVA) in H₂O solution was diluted with a further 10 g of H₂O. To this solution 6 g of 1% Pd chabazite powder was added. The ink was the dried in the oven and the resulting solid ground down to a fine powder.
(c) 1% Pd / chabazite powder in an ethyl vinyl alcohol film
   1 % Pd/ chabazite was compounded with EVA using a twin screw extruder to create a masterbatch. The masterbatch was then extruder through a blown film line to produce a three-layer structure, with the Pd chabazite incorporated into the middle layer. The film had a target amount of 5 wt% of 1% Pd / chabazite based on the total weight of the film.
(d) 1% Pd / chabazite in a silicone elastomer coating onto an LDPE film

### Prepared as described in Example 6

A sample of each of (a) to (d) was selected to provide a target amount of 1 wt% Pd chabazite of 0.25g. Each sample was tested for ethylene adsorption according to the method described in Example 2 above. The results of this testing are provided in Figure 7.

This data shows that sample (d) has a slower rate of adsorption than the powder sample (a) but a similar overall capacity indicating that the coated film has been produced without loss of capacity. The samples prepared with the water-soluble PVA binder (b) and with the Pd chabazite extruded in an EVA film (c) showed a lower rate of ethylene adsorption and a reduced capacity in comparison with sample (d).

## Claims

1. An addition cure siloxane composition comprising:
(i) a polyorganosiloxane comprising at least two alkenyl groups;
(ii) an organohydrogenpolysiloxane containing at least two hydrogen atoms bonded to silicone atoms;
(iii) an inorganic ethylene adsorbent;
wherein the inorganic ethylene adsorbent comprises a zeolite doped with palladium.

2. A composition according to claim 1 wherein the inorganic ethylene adsorbent comprises between 1 and 50 wt% of the total weight of the composition.

3. A composition according to claim 1 or claim 2 wherein the siloxane composition is UV activated.

4. A composition according to any one of claims 1 to 3 wherein the polyorganosiloxane is a vinyl terminated polydimethylsiloxane and the organohydrogenpolysiloxane is a methylhydrosiloxane-dimethylsiloxane copolymer.

5. A composition according to any one of claims 1 to 4 wherein the zeolite is a small-pore zeolite in which the maximum pore size is an 8-membered ring.

6. A composition according to claim 5 wherein the zeolite has a chabazite framework type.

7. A composition according to any one of claims 1 to 6 wherein the composition comprises a curing catalyst.

8. A material for the adsorption of ethylene, the material comprising a base material and a coating on the surface of the base material, the coating comprising a cured product of a composition according to claim 7.

9. A method for making a composition according to claim 7, the method comprising the step of combining the polyorganosiloxane, the organohydrogenpolysiloxane, the inorganic ethylene adsorbent, and the curing catalyst.

10. A method for making a material for the adsorption of ethylene, the material comprising a base material and a coating on the surface of the base material, the coating comprising a silicone elastomer and an inorganic ethylene adsorbent; the method comprising the steps of:
(i) coating the base material with a siloxane composition according to claim 7;
(ii) curing the siloxane composition.

11. A method according to claim 10 wherein the base material is a polymer film.

12. A method according to claim 11 wherein the coating step is a gravure coating or spray coating step.

13. A packaging structure comprising a material according to claim 8.

## Patentansprüche

1. Additionshärtende Siloxanzusammensetzung, umfassend:
(i) ein Polyorganosiloxan, umfassend mindestens zwei Alkenylgruppen;
(ii) ein Organohydrogenpolysiloxan, das mindestens zwei an Siliconatome gebundene Wasserstoffatome enthält;
(iii) ein anorganisches Ethylenadsorptionsmittel;
wobei das anorganische Ethylenadsorptionsmittel einen mit Palladium dotierten Zeolith umfasst.

2. Zusammensetzung nach Anspruch 1, wobei das anorganische Ethylenadsorptionsmittel zwischen 1 und 50 Gew.-% des Gesamtgewichts der Zusammensetzung umfasst.

3. Zusammensetzung nach Anspruch 1 oder 2, wobei die Siloxanzusammensetzung UV-aktiviert ist.

4. Zusammensetzung nach einem der Ansprüche 1 bis 3, wobei das Polyorganosiloxan ein vinylterminiertes Polydimethylsiloxan ist und das Organohydrogenpolysiloxan ein Methylhydrosiloxan-Dimethylsiloxan-Copolymer ist.

5. Zusammensetzung nach einem der Ansprüche 1 bis 4, wobei der Zeolith ein kleinporiger Zeolith ist, bei dem die maximale Porengröße ein 8-gliedriger Ring ist.

6. Zusammensetzung nach Anspruch 5, wobei der Zeolith einen Chabazit-Gerüsttyp aufweist.

7. Zusammensetzung nach einem der Ansprüche 1 bis 6, wobei die Zusammensetzung einen Härtungskatalysator umfasst.

8. Material für die Adsorption von Ethylen, das Material umfassend ein Basismaterial und eine Beschichtung auf der Oberfläche des Basismaterials, die Beschichtung umfassend ein gehärtetes Produkt einer Zusammensetzung nach Anspruch 7.

9. Verfahren zum Herstellen einer Zusammensetzung nach Anspruch 7, das Verfahren umfassend den Schritt eines Kombinierens des Polyorganosiloxans, des Organohydrogenpolysiloxans, des anorganischen Ethylenadsorptionsmittels und des Härtungskatalysators.

10. Verfahren zum Herstellen eines Materials für die Adsorption von Ethylen, das Material umfassend ein Basismaterial und eine Beschichtung auf der Oberfläche des Basismaterials, die Beschichtung umfassend ein Siliconelastomer und ein anorganisches Ethylenadsorptionsmittel; das Verfahren umfassend die Schritte:
(i) Beschichtendes Basismaterials mit einer Siloxanzusammensetzung nach Anspruch 7;
(ii) Aushärten der Siloxanzusammensetzung.

11. Verfahren nach Anspruch 10, wobei das Basismaterial eine Polymerfolie ist.

12. Verfahren nach Anspruch 11, wobei der Beschichtungsschritt ein Gravurbeschichtungs- oder Sprühbeschichtungsschritt ist.

13. Verpackungsstruktur, umfassend ein Material nach Anspruch 8.

## Revendications

1. Composition de siloxane à durcissement par addition comprenant :
(i) un polyorganosiloxane comprenant au moins deux groupes alcényle ;
(ii) un organohydrogénopolysiloxane contenant au moins deux atomes d'hydrogène liés à des atomes de silicone ;
(iii) un adsorbant d'éthylène inorganique ;
dans laquelle l'adsorbant d'éthylène inorganique comprend une zéolite dopée au palladium.

2. Composition selon la revendication 1 dans laquelle l'adsorbant d'éthylène inorganique constitue entre 1 et 50 % en poids du poids total de la composition.

3. Composition selon la revendication 1 ou la revendication 2 dans laquelle la composition de siloxane est activée par UV.

4. Composition selon l'une quelconque des revendications 1 à 3 dans laquelle le polyorganosiloxane est un polydiméthylsiloxane à terminaison vinyle et l'organohydrogénopolysiloxane est un copolymère de méthylhydrosiloxanediméthylsiloxane.

5. Composition selon l'une quelconque des revendications 1 à 4 dans laquelle la zéolite est une zéolite à petits pores dans laquelle la taille maximale de pore est un cycle à 8 chaînons.

6. Composition selon la revendication 5 dans laquelle la zéolite a un type d'ossature de chabazite.

7. Composition selon l'une quelconque des revendications 1 à 6 dans laquelle la composition comprend un catalyseur de durcissement.

8. Matériau pour l'adsorption d'éthylène, le matériau comprenant un matériau de base et un revêtement sur la surface du matériau de base, le revêtement comprenant un produit durci d'une composition selon la revendication 7.

9. Procédé permettant de fabriquer une composition selon la revendication 7, le procédé comprenant l'étape de combinaison du polyorganosiloxane, de l'organohydrogénopolysiloxane, de l'adsorbant d'éthylène inorganique et du catalyseur de durcissement.

10. Procédé permettant de fabriquer un matériau pour l'adsorption d'éthylène, le matériau comprenant un matériau de base et un revêtement sur la surface du matériau de base, le revêtement comprenant un élastomère de silicone et un adsorbant d'éthylène inorganique ; le procédé comprenant les étapes consistant à :
(i) revêtir le matériau de base avec une composition de siloxane selon la revendication 7 ;
(ii) durcir la composition de siloxane.

11. Procédé selon la revendication 10 dans lequel le matériau de base est un film polymère.

12. Procédé selon la revendication 11 dans lequel l'étape de revêtement est une étape de revêtement par gravure ou de revêtement par pulvérisation.

13. Structure d'emballage comprenant un matériau selon la revendication 8.
